# EUROPÄISCHE PATENTANMELDUNG

(11) **EP 1 142 914 A1**
(43) Veröffentlichungstag der Anmeldung: **10.10.2001**
(21) Anmeldenummer: 01108412.6
(22) Anmeldetag: 03.04.2001
(51) Int. Cl.: C08F 8/00

(54) **Additivarme strahlenhärtbare Bindemittel**

(30) Priorität: 04.04.2000 DE 10016653
(71) Anmelder: BASF AKTIENGESELLSCHAFT, 67056 Ludwigshafen (DE)
(72) Erfinder: Binder, Horst, 68623 Lampertheim (DE); Neumann, Petra, 67459 Böhl-Iggelheim (DE)
(74) Vertreter: Kinzebach, Werner, Dr.

(57) **Zusammenfassung**

Die Erfindung betrifft additivarme, unvernetzte strahlenhärtbare Bindemittel, die erhältlich sind durch polymeranaloge Umsetzung von
A) epoxidgruppenhaltigen (Meth)acrylat-Copolymerisaten (A) mit
B) mindestens einer olefinisch ungesättigten aliphatischen C₃-C₆-Monocarbonsäure und/oder einem Alkylhalbester einer olefinisch ungesättigten aliphatischen C₄-C₈-Dicarbonsäure (B),
wobei die polymeranaloge Umsetzung der Copolymerisate A
a) mit 1,5 bis 3 Äquivalenten, bezogen auf die Epoxidgruppen des Copolymerisats A, der Carbonsäure B
b) in Gegenwart von 0,1 bis 3 Gew.-%, bezogen auf das Copolymerisat A, eines Tetraalkylammoniumhalogenids,
c) in Abwesenheit einer wesentlichen Menge eines Polymerisationsinhibitors,
d) in hochkonzentrierter Lösung oder im wesentlichen lösungsmittelfrei,
e) bei einer Temperatur von 100 bis 150°C und
f) mit einem Umsetzungsgrad der Epoxidgruppen des Copolymerisats A von mindestens 80%
erfolgt.

Bevorzugt sind die Bindemittel für Klarlacke oder Pulverlacke brauchbar.

## Beschreibung

Die Erfindung betrifft additivarme transparente und unverfärbte strahlenhärtbare Bindemittel, die durch polymeranaloge Umsetzung eines epoxidgruppenhaltigen Acrylcopolymerisats mit einer olefinisch ungesättigten Carbonsäure hergestellt sind.

Bindemittel der vorgenannten Art sind an sich bekannt. So ist z.B. aus der Patentanmeldung WO 93/25590 bekannt, Polymere mit ungesättigten Seitengruppierungen für Decklacke in der Automobilindustrie herzustellen, indem ein Copolymerisat A, das Monomere (a) mit einer Epoxy-, Carbonsäure-, Hydroxyl- oder Isocyanatogruppe einpolymerisiert enthielt, polymeranalog mit einem Monomeren (B) umgesetzt wird, das eine funktionelle Gruppierung enthielt, die mit der funktionellen Gruppe des Copolymerisats (A) reagieren kann. Monomere B waren z.B. (Meth)acrylsäure, Glycidyl(meth)acrylat, Allylglycidylether, Hydroxyethyl(meth)acrylat oder Maleinsäure. Zur batchweisen polymeranalogen Umsetzung wurden die funktionellen Monomeren B bei 50 bis 150°C unter Rühren in ca. 50%-ige Lösungen der Copolymerisate A eingetropft in Gegenwart eines Reaktionsbeschleunigers für die Umsetzung der funktionellen Gruppen sowie in Gegenwart eines Polymerisationsinhibitors wie einer Hydrochinonverbindung. Der Ansatz wurde dann unter Rühren einige Stunden bei der genannten Temperatur gehalten. Gemäß der DE-A 4337482 wurden solche Acrylcopolymerisate A polymeranalog mit den funktionellen olefinisch ungesättigten Monomeren B in hochkonzentrierter Lösung oder in Substanz bei 70 bis 150°C bei einer mittleren Verweilzeit von insbesondere 5 bis 10 Minuten umgesetzt, wobei das Verhältnis der funktionellen Gruppen des Copolymerisats A zu den funktionellen Gruppen des Monomeren B bevorzugt 1:1 betrug. Auch hier erfolgte nach den Beispielen die polymeranaloge Umsetzung in Gegenwart eines Reaktionsbeschleunigers (eines Phosphins) und eines Phenothiazins als üblichem Polymerisationsinhibitor (vgl. auch Spalte 6, Zeile 65 bis Spalte 7, Zeile 3). Die WO 97/46 594 beschreibt, daß sich entsprechende polymeranaloge Umsetzungen auch bei einer Temperatur von 150 bis 200°C während 50 bis 60 Minuten in Abwesenheit eines Reaktionsbeschleunigers ohne Gelierung durchführen lassen, wenn man in Gegenwart angemessener Inhibitormengen (vgl. S.1, letzter Textabsatz sowie Anspruch 1) und mit wirksamem Wärmeaustausch arbeitet und das Entstehen lokaler Überhitzungen vermeidet. Als Inhibitoren sind Hydrochinon und dessen Monoether, Phenothiazin, aromatische Diamine und Triphenylphosphit genannt.

Es hat sich nun gezeigt, daß strahlen- und insbesondere UV-härtbare Bindemittel dieser Art besonders vorteilhaft bei der Anwendung sind und verbesserte optische Eigenschaften und Witterungsstabilität aufweisen, wenn sie möglichst wenig niedermolekulare Nebenbestandteile, wie Inhibitoren oder bestimmte Reaktionsbeschleuniger enthalten.

Der vorliegenden Erfindung lag somit die Aufgabe zugrunde, mit UV-Strahlen härtbare Bindemittel mit seitenständigen olefinisch ungesättigten C=C-Doppelbindungen durch polymeranaloge Umsetzung von Epoxidgruppen enthaltenden Acrylcopolymerisaten mit carboxylgruppenhaltigen Monomeren mit verminderter Menge an niedermolekularen Nebenbestandteilen und somit verbesserten optischen Eigenschaften herzustellen, die besonders vorteilhaft als transparente unverfärbte Lackbindemittel für z.B. Deck- und Klarlacke verwendet werden können.

Es wurde nun gefunden, daß diese Aufgabe gelöst wird durch strahlenhärtbare Bindemittel, die erhältlich sind durch polymeranaloge Umsetzung von
A) epoxidgruppenhaltigen (Meth)acrylat-Copolymerisaten mit
B) mindestens einer olefinisch ungesättigten aliphatischen C₃-C₆-Monocarbonsäure und/oder einem Alkylhalbester einer olefinisch ungesättigten aliphatischen C₄-C₈-Dicarbonsäure (B) wobei die polymeranaloge Umsetzung der Copolymerisate A
   a) mit 1,5 bis 3 Äquivalenten, bezogen auf die Menge der Epoxidgruppen des Copolymerisats A, der Carbonsäure B
   b) in Gegenwart von 0,1 bis 3 Gew.-%, bezogen auf das Copolymerisat A, eines Tetraalkylammoniumhalogenids,
   c) in Abwesenheit einer wesentlichen Menge einer weiteren Verbindung, die als Polymerisationsinhibitor wirkt,
   d) in hochkonzentrierter Lösung oder im wesentlichen lösungsmittelfrei,
   e) bei einer Temperatur von 100 bis 150°C und
   f) mit einem Umsetzungsgrad der Epoxidgruppen des Copolymerisats A von mindestens 80%
erfolgt.

Es war überraschend, daß die erfindungsgemäßen Umsetzungsprodukte bei Verwendung der speziellen Reaktionsbeschleuniger b) im wesentlichen lösungsmittelfrei bei so hohen Reaktionstemperaturen in Abwesenheit einer wirksamen Menge üblicher Inhibitoren wie Phenolverbindungen oder Phenothiazine mit hohem Umsetzungsgrad der Epoxidgruppen hergestellt werden konnten, ohne daß bei der Umsetzung Vernetzungen auftraten und/oder ein starker Anstieg des Molekulargewichts bzw. der Viskosität des Polymeren eintrat. Die erzielte Verminderung des Produktes an niedermolekularen Nebenbestandteilen führt zu verbesserten anwendungstechnischen Eigenschaften des Produkts wie verbesserten optischen Eigenschaften und einer verbesserten Witterungsstabilität.

Als epoxidgruppenhaltige (Meth)acrylat-Copolymerisate A für die Herstellung der erfindungsgemäßen polymeranalogen Umsetzungsprodukte kommen insbesondere Copolymerisate von Acrylsäureestern und/oder Methacrylsäureestern in Frage, die 40 bis 95 Gew.-% Acrylester- und/oder Methacrylester und 5 bis 60 und insbesondere 10 bis 35 Gew.-% eines copolymerisierbaren olefinisch ungesättigten Monomers mit einer Epoxidgruppe einpolymerisiert enthalten. Geeignete Ester der Acryl- und/oder Methacrylsäure sind insbesondere Alkylester mit 1 bis 10 C-Atomen im Alkylrest wie Methylmethacrylat, Methylacrylat, Ethylacrylat, Ethylmethacrylat, Isopropylacrylat, Butylacrylate und -methacrylate, wie n-Butylacrylat und n-Butylmethacrylat, 2-Ethylhexylacrylat, 2-Ethylhexylmethacrylat und n-Decylacrylat. Die Copolymerisate können aber auch andere copolymerisierbare olefinisch ungesättigte Monomere z.B. Styrol, α-Methylstyrol, Acrylnitril oder Methacrylnitril, Vinylether oder Vinylester wie Vinylacetat einpolymerisiert enthalten, soweit die anderen Monomeren keine funktionellen Gruppen enthalten, die die polymeranaloge Umsetzung zwischen den Epoxy- und Carboxylgruppen wesentlich beeinträchtigen. Beispiele geeigneter Copolymerisate olefinisch ungesättigter Monomerer mit einer Epoxidgruppe sind insbesondere olefinisch ungesättigte Glycidylester und -ether wie Allylglycidylether, Glycidylcrotonat, und bevorzugt Glycidylmethacrylat und Glycidylacrylat.

Durch eine geeignete Auswahl von "harte" Homopolymerisate (Tg > 20°C) und "weiche" (Tg < 0°C) Homopolymerisate bildenden Monomeren und der Molekulargewichtsbereiche sowie der Polydispersität M_{w}/Mₙ lassen sich in an sich bekannter Weise für den Verwendungszweck der polymeranalogen Umsetzungsprodukte als Lacke geeignete Copolymerisate A herstellen. Geeignete harte und weiche Homopolymerisate bildende Monomere sind z.B. in Ullmann's Encyclopedia of Industrial Chemistry, 5th Ed., Vol.A21, S.169 (1992) beschrieben. Bevorzugt weisen die Copolymerisate A ein durchschnittliches Molekulargewicht Mₙ von ca. 1500 bis 10000 und insbesondere ca. 1500 bis 6000 und eine Polydispersität M_{w}/Mₙ von kleiner als 4 und insbesondere kleiner als 3 auf. Die Herstellung solcher Copolymerisate A ist an sich bekannt (vgl. z.B. EP-B 0156170 oder DE-A 4 337 481) und erfolgt bevorzugt durch radikalische Copolymerisation in Substanz oder Lösung bei Temperaturen oberhalb von 150°C in kurzer Polymerisationszeit (< 90, bevorzugt < 25 Minuten) bis zu einem Umsatz von ca. 80 bis 90% und anschliessender Entgasung des Copolymerisats A.

Carbonsäuregruppen enthaltende Monomere B für die polymeranaloge Umsetzung sind olefinisch ungesättigte aliphatische C₃-C₆-Monocarbonsäuren, wie Acrylsäure, Methacrylsäure, Crotonsäure und/oder Alkylmonoester von olefinisch ungesättigten aliphatischen C₄-C₈-Dicarbonsäuren wie C₁-C₁₀-Alkylmonoester der Malein- oder Fumarsäure. Bevorzugt ist die Umsetzung der Copolymerisate A mit Acrylsäure und/oder Methacrylsäure. Zur Vermeidung der Entstehung von Vernetzungen und zur Erzielung eines hohen Umsetzungsgrades der Epoxidgruppen des Copolymerisats A bei der polymeranalogen Umsetzung hat es sich als wesentlich erwiesen, das Copolymerisat A mit einem deutlichen molaren Überschuß der Carboxylgruppen des Monomeren B im Verhältnis zu der Menge der Epoxidgruppen des Copolymersats A umzusetzen. So wird das Copolymerisat mit 1,5 bis 3 und bevorzugt mit 2 bis 3 Äquivalenten, bezogen auf die Menge der Epoxidgruppen des Copolymerisats A, der ungesättigten Carbonsäure B umgesetzt.

Zur Erzielung eines hohen Umsetzungsgrades der Epoxidgruppen des Copolymerisats A von mindestens 80% und bevorzugt mindestens 90 bis 95% hat es sich als sehr vorteilhaft erwiesen, bei der polymeranalogen Umsetzung als Reaktionsbeschleuniger der Epoxid-Carbonsäure-Reaktion ein Tetraalkylammoniumhalogenid, insbesondere ein Bromid oder ein Chlorid zu verwenden, wobei die Alkylgruppe im Ammoniumsalz im allgemeinen jeweils 1 bis 10 C-Atome enthält. Bevorzugt sind Tetraalkylammoniumhalogenide, deren Alkylgruppen jeweils 4 bis 8 C-Atome enthalten. Als sehr geeignet hat sich das Tetra-n-butylammoniumbromid als Reaktionsbeschleuniger erwiesen. Die Menge des zugemischten Tetraalkylammoniumhalogenids beträgt im allgemeinen 0,1 bis 3 und insbesondere 0,5 bis 3 Gew.-%, bezogen auf das Copolymerisat A. Unter anderem macht es die Umsetzung in Gegenwart von Tetraalkylammoniumhalogenid möglich, die polymeranaloge Umsetzung in Abwesenheit einer wesentliche Menge einer weiteren Verbindung durchzuführen, die als Polymerisationsinhibitor wirkt. Als wesentliche Menge eines Polymerisationsinhibitors wird dabei eine als Inhibitor wirksame Menge eines Polymerisationsinhibitors angesehen, die bei Herstellung oder Anwendung zu einer Verfärbung des polymeranalogen Umsetzungsproduktes führt. "In Abwesenheit einer wesentlichen Menge" bedeutet im Allgemeinen in Gegenwart von weniger als 25 Gew.-ppm, meist weniger als 20 Gew.-ppm, insbesondere weniger als 10 Gew.-ppm Polymerisationsinhibitor, bezogen auf das Copolymerisat A. Es ist bekannt, daß bei der polymeranalogen Umsetzung mit einem funktionellen polymerisierbaren Monomeren die Gefahr besteht, daß das Monomere für sich polymerisiert und/oder unter Einbeziehung der durch die Umsetzung entstandenen seitenständigen ungesättigten Gruppierungen vernetzte Polymere entstehen. Die Wahrscheinlichkeit zur Polymerisation und Vernetzung steigt bekanntlich mit der Reaktionszeit und insbesondere mit der Reaktionstemperatur. Aus diesem Grund ist in der oben als Stand der Technik zitierten Patentanmeldung WO 97/46594 der Zusatz von angemessenen Mengen an Polymerisationsinhibitoren (S.1, letzter Absatz) als unbedingt erforderliche Maßnahme angegeben. Viele Polymerisationen von Monomeren erfolgen bekanntlich bereits bei 80 bis 100°C. Es ist somit unerwartet, daß die erfindungsgemäßen unvernetzten Umsetzungsprodukte in Abwesenheit wesentlicher, wirksamer Mengen an üblichen Polymerisationsinhibitoren hergestellt werden können. Dies erlaubt einmal, die Menge an unerwünschten niedermolekularen Nebenprodukten in den strahlenhärtbaren Polymeren zu vermindern. Im Hinblick darauf, daß viele übliche Polymerisationsinhibitoren wie Hydrochinonverbindungen oder Phenothiazin die so stabilisierten Produkte bei Herstellung oder Verwendung verfärben, erlaubt die Tatsache, daß das Umsetzungsprodukt keine solcher üblichen Inhibitoren enthält, die Herstellung und Verwendung transparenter unverfärbter Produkte, was einen deutlicher Vorteil der erfindungsgemäßen strahlenhärtbaren Bindemittel, z.B. bei der Anwendung als Klarlacke darstellt.

Die polymeranaloge Umsetzung erfolgt üblicherweise in hochkonzentrierter Lösung mit einem Feststoffgehalt an Copolymerisat A von mindestens 60% und insbesondere mindestens 70%, bevorzugt aber im wesentlichen lösungsmittelfrei oder in Substanz bei einer Temperatur von 100 bis 150°C und bevorzugt bei 120 bis 150°C unter wirksamer Durchmischung der Reaktanden. Die Umsetzung wird beendet, wenn ein Umsetzungsgrad der Epoxidgruppen des Copolymerisats A von mindestens 80%, bevorzugt von mindestens 90 bis 98 % erreicht ist. Bevorzugt beträgt die Reaktionszeit weniger als 30 Minuten.

Die polymeranaloge Umsetzung kann in bekannten Reaktoren wie z.B. Rührkesseln erfolgen. Den Reaktoren können mit Vorteil auch Mischer nachgeschaltet sein, wodurch eine weitere Erhöhung des Umsetzungsgrades der Epoxidgruppen des Copolymerisats erreicht werden kann. Zweckmässig ist ferner, den Reaktoren für die Umsetzung der Monomeren B mit dem Copolymerisat A Reaktoren nachzuschalten, in denen das Reaktionsprodukt durch Anlegen eines Unterdrucks von flüchtigen Bestandteilen weitgehend befreit werden kann. Bevorzugt wird die polymeranaloge Umsetzung in einem kontinuierlich betriebenen Reaktor im wesentlichen lösungsmittelfrei durchgeführt, wobei die mittlere Verweilzeit insbesondere 12 bis 30 und bevorzugt 12 bis 20 Minuten beträgt. Als besonders vorteilhaft hat es sich bei der hohen Viskosität der Reaktionsmischung erwiesen, als Reaktoren Extruder und insbesondere Mehrschneckenextruder zu verwenden, die eine sehr gute Durchmischung des Reaktionsgemisches bei der Reaktionstemperatur in sehr kurzer Zeit gestatten, wobei eine Extrudertemperatur von 100 bis 150 und bevorzugt von 120 bis 150°C sich als vorteilhaft erwiesen hat. Eine Übersicht über Bauformen kontinuierlicher Reaktoren und Kriterien für deren Auswahl geben z.B. H.Thiele und H.D.Zettler "Kontinuierliche Reaktionsmaschinen" in "Polymerreaktionen und reaktives Aufbereiten in kontinuierlichen Maschinen", VDI-Verlag, Düsseldorf 1988, sowie H.Herrmann "Schneckenmaschinen in der Verfahrenstechnik", Springer-Verlag, Berlin-Heidelberg-New York 1972. Sehr geeignet für die polymeranaloge Umsetzung der Copolymerisate A in Substanz mit den reaktiven Monomeren sind Mehrschneckenextruder und insbesondere zweiwellige Schneckenmaschinen mit gleichlaufenden Schneckenwellen wie die zweiwelligen ZSK-Schnekkenextruder der Fa. Werner & Pfleiderer. So lassen sich in entsprechenden Extrudern nach einer ersten Eingabe- und Förderzone in einer 2. Zone des Extruders das auf etwa Reaktionstemperatur erhitzte und aufgeschmolzene Copolymerisat A mit dem reaktiven Monomeren B und dem zugesetzten Reaktionsbeschleuniger vermischen. In einer 3. Zone des Extruders oder in einem nachgeschalteten 2. Extruder, wie einem gleichsinnig drehendem Zweischneckenextruder (z.B. der Type ZSK 58 der Fa. Werner & Pfleiderer) wird dann vorteilhaft die umgesetzte Masse entgast, d.h. durch Anlegen eines Unterdruckes von flüchtigen Bestandteilen weitgehend befreit, wobei je nach angelegtem Unterdruck die Temperatur in der Entgasungszone gleich oder verschieden von der Reaktionstemperatur sein kann. Danach wird die im allgemeinen geschmolzene Masse ausgetragen. Es kann sich dann z.B. eine Weiterverarbeitung zu Pulvern geeigneter Teilchendurchmesser anschließen.

Die erfindungsgemäßen Umsetzungsprodukte haben insbesondere Glastemperaturen im Bereich von -20 bis +70°C und sind gut verfilmbar. Sie zeichnen sich durch verbesserte optische Eigenschaften aus, sind transparent und unverfärbt, zeigen gute Härtungseigenschaften und im gehärteten Zustand eine gute Witterungsstabilität. Sie eignen sich auch aufgrund des verminderten Gehalts an Nebenprodukten besonders für eine Verwendung als Verpackungslacke und allgemein für eine Anwendung als vielfach verwendbare Klarlacke, Pulverlacke sowie für Powderslurries.

Die nachstehenden Beispiele sollen die Erfindung weiter erläutern, aber nicht beschränken. Soweit nicht anders angegeben, beziehen sich Teile und Prozente auf das Gewicht. Die Bestimmung des Epoxidwertes erfolgte nach DIN 53188 (vgl.auch Ullmann: Encyclopädie der technischen Chemie, Bd.8, 3.Auflage 1957, S.436). Der Feststoffgehalt wurde gravimetrisch durch 20-minütiges Trocknen bei 200°C bestimmt. Die mittleren Molekulargewichte Mₙ, M_{w} sowie die Polydispersität M_{w}/Mₙ wurden durch Gelpermeationschromatographie mit Polystyrol als Standard bestimmt. Die Methoden sind beschrieben im Analytiker-Taschenbuch Band 4, S.433-442, Berlin 1984 sowie in "Modern Size Exclusion Liquid Chromatography, Practice of Gel Permeation Chromatography", Wiley New York 1979. Die angegebenen Viskositäten wurden bestimmt mit einem Platte-Platte-Viskosimeter (C.Gerth, Rheometrie, Ullmanns Enzyklopädie der Techn. Chemie, Band 19, Seiten 17-18). Die mittlere Verweilzeit der Reaktionsmischung im Reaktionstemperaturbereich im kontinuierlich betriebenen Reaktor, insbesondere im Extruder, schließt die Verweilzeit in der Entgasungszone ein, wenn die Temperatur dort mindestens im Reaktionstemperaturbereich liegt. Die mittlere Verweilzeit wurde bestimmt, indem am Reaktoreingang dem Reaktionsgemisch ein Titandioxid-Granulat zugefügt wird, das ein Sensorlicht (Infrarotlicht) diffus reflektiert. Die Sensorintensität, durch die Reflektion verändert, wird von einem Empfänger am Ende des Reaktors (meist nach dem Entgasungsprozeß) detektiert und gibt so ein deutlich erkennbares Signal für die mittlere Verweilzeit des Reaktionsgemisches bzw. des Polymeren im Reaktor. Die Säurezahl (mg KOH pro g Polymer) wurde durch Titration der in Aceton gelösten Probe mit methanolischer Kalilauge bestimmt.

### Beispiel 1 (mit Katalysator, ohne zusätzlichen Inhibitor)

Ein epoxidgruppenhaltiges Copolymerisat A, das 23% Glycidylacrylat, 7% 2-Ethylhexylacrylat, 9% tert.Butylcyclohexylacrylat, 47% Methylmethacrylat und 14% Styrol einpolymerisiert enthielt, ein durchschnittliches Molekulargewicht Mₙ von 2900 und eine Polydispersität M_{w}/Mₙ von 2,6 aufwies, wurde mit 3% seines Gewichts an Tetra-n-butylammoniumbromid unter Rühren aufgeschmolzen und bei 130°C mit 2 Äquivalenten der Epoxidgruppenmenge an Acrylsäure polymeranalog umgesetzt und gerührt, ohne daß eine zusätzliche, als Polymerisationsinhibitor wirkende Verbindung zugesetzt worden war. Der Reaktionsansatz war noch nach über 1 Stunde rührbar und unverfärbt.

### Vergleichsbeispiel 2 (ohne Katalysator, mit zugesetztem Inhibitor)

Beispiel 1 wurde wiederholt, jedoch kein Tetrabutylammoniumbromid, sondern der Inhibitor Phenothiazin in einer Menge von 30 ppm, bezogen auf das Copolymerisat A, zugegeben. Bei der polymeranalogen Umsetzung wurde eine starke Viskositätserhöhung des Copolymerisats festgestellt, das sich zudem rötlich verfärbte.

### Vergleichsbeispiel 3 (ohne Katalysator, ohne zusätzlichen Inhibitor)

Beispiel 1 wurde wiederholt, jedoch wurde ein Zusatz eines Reaktionsbeschleunigers (Katalysators) für die Umsetzung der Epoxidmit Carbonsäuregruppen ebenso unterlassen wie der Zusatz einer weiteren als Polymerisationsinhibitor wirkenden Verbindung. Es resultierte ein nach 1 Stunde sehr stark vernetztes Umsetzungsprodukt.

### Vergleichsbeispiel 4 (mit Katalysator und Inhibitor)

Beispiel 1 wurde wiederholt, jedoch dem Tetrabutylammoniumbromid als Reaktionsbeschleuniger enthaltendem Copolymerisat A zusätzlich 30 ppm, bezogen auf das Copolymerisat A, Phenothiazin als Polymerisationsinhibitor zugesetzt. Das erhaltene polymere Umsetzungsprodukt wies gegenüber dem Copolymerisat A keine höhere Viskosität, jedoch eine rötliche Verfärbung auf.

### Beispiel 5 (mit Katalysator, ohne Inhibitor)

In einem zweiwelligen Schneckenextruder (Type ZSK der Fa. Werner & Pfleiderer mit gleichlaufenden Schneckenwellen) wurden 4 kg/h einer Mischung eines gemahlenen Copolymerisats A, das 47% Methylmethacrylat, 14% Styrol, 7% 2-Ethylhexylacrylat, 9% tert.Butylcyclohexylacrylat und 23% Glycidylmethacrylat einpolymerisiert enthielt, ein durchschnittliches Molekulargewicht M_{w} von 7250 g/mol und eine Polydispersität M_{w}/Mₙ von 2,8 aufwies, mit 1%, bezogen auf das Copolymerisat A, von Tetra-n-butylammoniumbromid mit 2 Äquivalenten pro Epoxidgruppe im Copolymerisat an Acrylsäure vermischt und bei 140°C polymeranalog umgesetzt. Dem Ansatz war kein zusätzlicher Polymerisationsinhibitor zugesetzt worden. Nach der Umsetzung wurde das Produkt in einem zweiten Extruder, einem gleichläufigen Zweiwellenextruder der Fa. Werner & Pfleiderer, bei gleicher Temperatur entgast. Die mittlere Verweilzeit des Gesamtprozesses betrug etwa 15 Minuten. Das vor der polymeranalogen Umsetzung bestimmte Molekulargewicht M_{w} von 7250 g/mol war bei der Umsetzung nur auf 7300 g/mol (+0,7%) angestiegen, war nicht vernetzt und nicht verfärbt.

### Beispiele 6 bis 9 (mit Katalysator, ohne Inhibitor)

Ein Copolymerisat A mit der in Beispiel 5 angegebenen Zusammensetzung wurde in einem zweiwelligen Schneckenextruder (Type ZSK der Fa. Werner & Pfleiderer mit gleichlaufenden Schneckenwellen) bei einer Reaktionstemperatur von 130°C und einer mittleren Verweilzeit von 13 Minuten mit unterschiedlichen Mengen an Acrylsäure und unterschiedlichen Mengen an Tetra-n-butylammoniumbromid als Reaktionsbeschleuniger (Katalysator) in Abwesenheit einer weiteren Verbindung, die als Polymerisationsinhibitor wirkt, umgesetzt. Die Ergebnisse zeigt Tabelle 1.

**Tabelle 1. -**

| Ergebnisse der Beispiele 6 bis 9 | | | | |
|---|---|---|---|---|
| Beispiel | 6 | 7 | 8 | 9 |
| Acrylsäure Äquivalente* | 1 | 1,5 | 2 | 3 |
| Katalysator Konz.(%)** | 2 | 2 | 1 | 1 |
| Mₙ (g/mol) | | | | |
| vor Umsetzg. nach Umsetzg. | 2350 vernetzt | 2350 2490 | 2350 2420 | 2350 2380 |
| Umsatz (%) d. Epoxidgruppen | nicht bestimmt | 96 | 98 | 98 |

| | | | | |
|---|---|---|---|---|
| *: bezogen auf Zahl der Epoxidgruppen im Copolymerisat A | | | | |
| **: bezogen auf Menge des Copolymerisats A | | | | |

### Beispiele 10 bis 12 (mit Katalysator, ohne Inhibitor)

In drei Ansätzen wurde jeweils ein Copolymerisat A (mit der in Beispiel 5 angegebenen Zusammensetzung) mit je 3% seines Gewichts eines der Reaktionsbeschleuniger (Katalysatoren) K1, K2 oder K3:
K1 : Triphenylphosphin
K2 : Benzyltributylammoniumbromid und
K3 : Tetra-n-butylammoniumbromid
aufgeschmolzen und ohne Zusatz einer zusätzlichen als Polymerisationsinhibitor wirkenden Verbindung bei 130°C mit je 2 Äquivalenten Acrylsäure, bezogen auf die Epoxidgruppen des Copolymerisats A, umgesetzt und gerührt. Jeweils 1, 2 und 3 Stunden nach Zusatz der Acrylsäure wurden die Viskositäten der aus der Reaktionsmischung gezogenen Proben, sowie nach 20 Minuten die %-Mengen der umgesetzten Epoxidgruppen der Copolymerisats A bestimmt. Wie Tab. 2 zeigt, wurde mit Triphenylphosphin der stärkste Viskositätsanstieg und mit Tetrabutylammoniumbromid der niedrigste Viskositätsanstieg (praktisch keine Vernetzung) und der höchste Umsatz der Epoxidgruppen erreicht.

**Tabelle 2 -**

| Katalysator und Viskositätsanstieg | | | | | |
|---|---|---|---|---|---|
| Beisp. | Katalysator | Viskosität [Pa·s] nach | | | %-Umsatz |
| | | 1 Std. | 2 Std. | 3 Std. | Epoxid 20 Min. |
| 10 | 3% K1 | 51 | 270 | 630 | 96 |
| 11 | 3% K2 | 41 | 120 | 420 | 71 |
| 12 | 3% K3 | 35 | 35 | 36 | 97 |

### Beispiele 13-18 (mit Katalysator, mit/ohne Inhibitor)

Ansätze 13 bis 18 eines Copolymerisats A, das 50% Methylmethacrylat, 30% tert.Butylacrylat und 20% Glycidylmethacrylat einpolymerisiert enthielt, ein mittleres Molekulargewicht Mₙ von 3460 g/mol und eine Polydispersität M_{w}/Mₙ von 2,9 aufwies, wurden mit jeweils 2% seines Gewichts an Tetra-n-butylammoniumbromid vermischt. Im Fall der Ansätze 15 und 18 wurden zusätzlich je 250 ppm, bezogen auf das Copolymerisat A, des Inhibitors Phenothiazin zugemischt. Die Mischungen wurden jeweils im Extruder bei 130 bzw. 150°C mit unterschiedlichen Mengen an Acrylsäure (Äquivalente bezogen auf die Epoxidgruppen im Copolymerisat A) polymeranalog umgesetzt und entgast. Die mittlere Verweilzeit einschließlich Entgasung bei jeweils gleicher Temperatur betrug jeweils 25 Minuten. Danach wurden jeweils die Molekulargewichte Mₙ, die prozentualen Umsatzmengen der Epoxidgruppen sowie die Produktfarben der Umsetzungsprodukte bestimmt wurden. Die Ergebnisse zeigt Tabelle 3.

**Tab.3 -**

| Ergebnisse der Beispiele 13-18 | | | | | | |
|---|---|---|---|---|---|---|
| Beispiel | 13 | 14 | 15 | 16 | 17 | 18 |
| Temp.(°C) | 130 | 130 | 130 | 150 | 150 | 150 |
| Äqivalente Acrylsäure | 1,5 | 3 | 1,5 | 1,5 | 3 | 1,5 |
| Phenothiazin Zusatz (ppm) | 0 | 0 | 250 | 0 | 0 | 250 |
| Mₙ (g/mol) | | | | | | |
| vor Umsetzg. | 3460 | 3460 | 3460 | 3460 | 3460 | 3460 |
| nach Umsetzg. | 4010 | 3780 | 4000 | 4180 | 3830 | 4120 |
| % Anstieg Mₙ | 16 | 9 | 16 | 21 | 11 | 19 |
| % Umsatz der Epoxidgruppen | 95 | 96 | 95 | 98 | 99 | 98 |
| Produktfarbe* | lg. | lg. | rt. | lg. | lg. | rt. |

| | | | | | | |
|---|---|---|---|---|---|---|
| * : lg.= leicht gelblich, rt.= rötlich | | | | | | |

### Beispiele 19 - 20 (mit Katalysator, ohne Inhibitor)

Eine 70%-ige Xylol-Lösung eines Epoxidgruppen enthaltenden Acrylatcopolymerisats A, das 20% Glycidylmethacrylat, 50% Methylmethacrylat und 30% 2-Ethylhexylacrylat einpolymerisiert enthielt und einen Epoxidäquivalenzwert von 0,1329 aufwies, wurde in einem Vorlagebehälter bei 80°C gelagert. Die 70%-ige Lösung wurde in einen kontinuierlich betriebenen 5 1-CSTR-Rührkessel bei 125°C eingegeben und gleichzeitig wurden durch eine separate Zuleitung 2 Äquivalente (bezogen auf die Menge der Epoxidgruppen im Copolymerisat) von Acrylsäure zudosiert, in der zuvor Tetra-n-butylammoniumbromid (1,5%, bezogen auf die Menge an Copolymerisat A) gelöst worden waren. Die Temperatur im Rührkessel erhöhte sich auf ca. 135°C. Bei einem Durchsatz von 10 kg/h betrug der Umsatz der Epoxidgruppen des Copolymerisats A 86%, der im Parallelversuch (Beispiel 20) durch einen nachgeschalteten Mischer der Fa. Sulzer auf 98% erhöht werden konnte. Die mittlere Verweilzeit in Beispiel 20 betrug 23 Minuten.

### Beispiele 21 - 25 (mit Katalysator, ohne Inhibitor)

Ein epoxidgruppenhaltiges Copolymerisat A gemäß Beispiel 1 wurde mit 1,5%, bezogen auf sein Gewicht, von Tetra-n-butylammoniumbromid vermahlen und danach in einem gleichsinnig drehenden Zweischneckenkneter ZSK 30 der Fa. Werner & Pfleiderer mit über Mem) branpumpen in den Extruder dosierten Mengen an Acrylsäure bei einer Temperatur von 130 bis 140°C polymeranalog umgesetzt. In einem nachgeschalteten gleichsinnig drehenden Zweischneckenextruder ZSK 58 der Fa. Werner & Pfleiderer wurde dann bei einem Unterdruck von jeweils 200 mbar eine Entgasung durchgeführt. Die mittlere Verweilzeit (mit Entgasung) betrug 18 Minuten bei 4 kg/h. Die Ergebnisse der Tab. 4 mit den ermittelten Restsäurezahlen der Copolymerisate zeigen, daß bei einer Extrudertemperatur von 130-140°C eine hinreichend effektive Entgasung und Entfernung von überschüssiger Acrylsäure durchgeführt werden kann.

**Tabelle 4 -**

| Entgasung des Umsetzungsproduktes | | | | | |
|---|---|---|---|---|---|
| Beispiel | 21 | 22 | 23 | 24 | 25 |
| Äquivalente Acrylsäure* | 1,5 | 1,5 | 1,5 | 2 | 2 |
| Polymerdurchsatz (kg/h) | 4 | 4 | 6 | 4 | 4 |
| Temp.Entgasungsextruder (°C) | 130 | 140 | 130 | 130 | 140 |
| Säurezahl nach Entgasung (mg KOH/g) | 6,8 | 5,2 | 8,7 | 7,5 | 6,8 |
| Umsatz(%) d. Epoxidgruppen | 92 | 94 | 90 | 96 | 97 |

| | | | | | |
|---|---|---|---|---|---|
| * : bezogen auf Zahl der Epoxidgruppen im Copolymerisat A | | | | | |

## Patentansprüche

1. Additivarme, unvernetzte, strahlenhärtbare Bindemittel, erhältlich durch polymeranaloge Umsetzung von
A) epoxidgruppenhaltigen (Meth)acrylat-Copolymerisaten (A) mit
B) mindestens einer olefinisch ungesättigten aliphatischen C₃-C₆-Monocarbonsäure und/oder einem Alkylhalbester einer olefinisch ungesättigten aliphatischen C₄-C₈-Dicarbonsäure (B),
wobei die polymeranaloge Umsetzung der Copolymerisate A
a) mit 1,5 bis 3 Äquivalenten, bezogen auf die Epoxidgruppen des Copolymerisats A, der Carbonsäure B
b) in Gegenwart von 0,1 bis 3 Gew.-%, bezogen auf das Copolymerisat A, eines Tetraalkylammoniumhalogenids,
c) in Abwesenheit einer wesentlichen Menge eines Polymerisationsinhibitors,
d) in hochkonzentrierter Lösung oder im wesentlichen lösungsmittelfrei,
e) bei einer Temperatur von 100 bis 150°C und
f) mit einem Umsetzungsgrad der Epoxidgruppen des Copolymerisats A von mindestens 80%
erfolgt.

2. Strahlenhärtbare Bindemittel nach Anspruch 1, **dadurch gekennzeichnet, daß** die Alkylgruppen des Tetraalkylammoniumhalogenids, die gleich oder verschieden sein können, jeweils 4 bis 8 C-Atome aufweisen.

3. Strahlenhärtbare Bindemittel nach Anspruch 1 oder 2, **dadurch gekennzeichnet, daß** es sich bei dem Tetraalkylammoniumhalogenid um Tetra-n-butylammoniumhalogenid handelt.

4. Strahlenhärtbare Bindemittel nach einem der Ansprüche 1 bis 3, **dadurch gekennzeichnet, daß** sie transparent sind und keine durch Polymerisationsinhibitoren verursachte Verfärbung aufweisen.

5. Strahlenhärtbare Bindemittel nach einem der Ansprüche 1 bis 4, **dadurch gekennzeichnet, daß** sie durch polymeranaloge Umsetzung in einem Extruder bei einer Extrudertemperatur von 120 bis 150°C erhältlich sind.

6. Strahlenhärtbare Bindemittel nach Anspruch 5, **dadurch gekennzeichnet, daß** sie mit einer mittleren Verweilzeit von 12 bis 30 Minuten erhältlich sind.

7. Strahlenhärtbare Bindemittel nach einem der Ansprüche 1 bis 6, **dadurch gekennzeichnet, daß** das Copolymerisat A ein Alkyl(meth)acrylatcopolymerisat ist, das 5 bis 60 Gew.-% eines reaktive Epoxidgruppen enthaltenden olefinisch ungesättigten Comonomeren einpolymerisiert enthält.

8. Strahlenhärtbare Bindemittel nach einem der Ansprüche 1 bis 7, **dadurch gekennzeichnet, daß** sie erhältlich sind durch Umsetzung des Copolymerisats A mit 2 bis 3 Äquivalenten, bezogen auf die Epoxidgruppen des Copolymerisats A, an Acryl- und/oder Methacrylsäure in Gegenwart von 0,1 bis 3 Gew.-% eines Tetra-C₄-C₈-alkylammoniumhalogenids und in Abwesenheit eines Polymerisationsinhibitors, in einem Extruder bei 120 bis 150°C bei einer mittleren Verweilzeit von 12 bis 30 Minuten.

9. Verfahren zur Herstellung der strahlenhärtbaren Bindemittel nach einem der Ansprüche 1 bis 8 durch polymeranaloge Umsetzung von
A) reaktive Epoxidgruppen enthaltenden Copolymerisaten mit
B) mindestens einer olefinisch ungesättigten aliphatischen C₃-C₆-Monocarbonsäure und/oder einem Alkylhalbester einer olefinisch ungesättigten aliphatischen C₄-C₈-Dicarbonsäure,
wobei die polymeranaloge Umsetzung der Copolymerisate A
a) mit 1,5 bis 3 Äquivalenten, bezogen auf die Epoxidgruppen des Copolymerisats A, der Carbonsäure B
b) in Gegenwart von 0,1 bis 3 Gew.-%, bezogen auf das Copolymerisat A, eines Tetraalkylammoniumhalogenids,
c) in Abwesenheit einer wesentlichen Menge eines Polymerisationsinhibitors,
d) in hochkonzentrierter Lösung oder im wesentlichen lösungsmittelfrei,
e) bei einer Temperatur von 100 bis 150°C und
f) mit einem Umsetzungsgrad der Epoxidgruppen des Copolymerisats A von mindestens 80%
erfolgt

10. Verwendung der Bindemittel nach einem der Ansprüche 1 bis 8 für Klarlacke, Pulverlacke, Verpackungslacke oder Powderslurries.
